# EUROPEAN PATENT APPLICATION

(11) **EP 2 818 674 A1**
(43) Date of publication of application: **31.12.2014**
(21) Application number: 13174377.5
(22) Date of filing: 28.06.2013
(51) Int. Cl.: F02D 19/06, F02D 41/00, F02D 19/08, F02D 41/30

(54) **Ending operation of dual fuel engine in gaseous fuel mode**

(71) Applicant: Caterpillar Motoren GmbH & Co. KG, 24159 Kiel (DE)
(72) Inventor: Tuexen, Thorsten, 24214 Gettorf (DE); Sixel, Eike Joachim, 24109 Kiel (DE); Haas, Stefan, 24107 Quarnbek / OT Flemhude (DE); Uslu, Fuat, 24146 Kiel (DE)
(74) Representative: Kramer Barske Schmidtchen Patentanwälte PartG mbB

(57) **Abstract**

A method for controlling operation of a dual fuel internal combustion engine is disclosed. The method comprises initiating an ending process of a gaseous fuel mode by stopping supply of gaseous fuel. During the ending process, combusting remaining gaseous fuel together with liquid fuel in a subgroup (12) of cylinders (8, 9, 10, 11). The method further comprises determining that the difference of a combustion process parameter in at least one cylinder (11) of the subgroup (12) and at least one cylinder (8, 9, 10) not in the subgroup (12),which combusts liquid fuel only, is within a preset acceptable range, and indicating that the ending process is completed.

## Description

### Technical Field

The present disclosure generally relates to dual fuel internal combustion engines, and more particularly to a method and device for controlling an ending process of a gaseous fuel mode of a dual fuel internal combustion engine.

### Background

Dual fuel internal combustion engines can operate in a liquid fuel mode (LFM) and in a gaseous fuel mode (GFM). In LFM, a liquid fuel, such as diesel fuel, is injected directly into an engine cylinder or a pre-combustion chamber as the sole source of energy during combustion. In GFM, a gaseous fuel such as natural gas is mixed with compressed charge air in an intake channel of a cylinder and a small amount of liquid fuel is injected into the cylinder or the pre-combustion chamber to ignite the mixture of air and gaseous fuel.

In such dual fuel internal combustion engines, one or more gaseous fuel admission valves are positioned between a source of gaseous fuel and individual inlet channels of each engine cylinder. When the gaseous fuel admission valves are opened in GFM, the gaseous fuel passes into individual inlet channels for mixing with compressed charge air. Such gaseous fuel admission valves may also be utilized in spark-ignited engines.

If GFM is not activated, the gaseous fuel supply lines of the dual fuel internal combustion engine should be free of gaseous fuel for safety reasons. Therefore, a venting line is typically connected to the gaseous fuel system to vent off remaining gaseous fuel from the gaseous fuel supply lines to the environment. To vent off remaining gaseous fuel, a purge gas may be supplied to the gaseous fuel supply lines to flush the same.

A system including a turbine fuel control with a purge control logic is disclosed in US 8,340,886 B2. The purge logic controls a purge sequence to open a purge valve for a purge gas before fully closing a fuel valve.

The present disclosure is directed, at least in part, to improving or overcoming one or more aspects of prior systems.

### Summary of the Disclosure

According to one aspect of the present disclosure, a method for ending a gaseous fuel mode of a dual fuel internal combustion engine is disclosed. The method may comprise initiating the ending process by stopping supply of gaseous fuel. The method may further comprise, during the ending process, combusting remaining gaseous fuel together with liquid fuel in a subgroup of cylinders. The method may further comprise determining that the difference of a combustion process parameter in at least one cylinder of the subgroup and at least one cylinder not in the subgroup, which combusts liquid fuel only, is within a preset acceptable range, and indicating that the ending process is completed.

According to another aspect of the present disclosure, a control system for controlling operation of a dual fuel internal combustion engine is disclosed. The dual fuel internal combustion engine may be configured to operate in a liquid fuel mode and in a gaseous fuel mode. The control system may comprise a control unit which may be configured to control the dual fuel internal combustion engine according to a method as exemplary disclosed herein.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic diagram of an exemplary dual fuel internal combustion engine; and
Fig. 2 shows a flow diagram of an exemplary method for controlling an ending process of a gaseous fuel mode.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that instead of releasing remaining gaseous fuel from the gaseous fuel supply lines to the environment, remaining gaseous fuel may be used to power the dual fuel internal combustion engine. Thereby, an environment-friendly solution may be provided which may reduce emission of greenhouse gases, namely gaseous fuel such as natural or methane gas. However, controlling the combustion of a steadily reducing amount of remaining gaseous fuel is a challenging task.

Hereinafter, a dual fuel internal combustion engine and a method for controlling the same are disclosed which facilitate a reliable control over the ending process of a gaseous fuel mode while providing an environment-friendly solution by combusting remaining gaseous fuel.

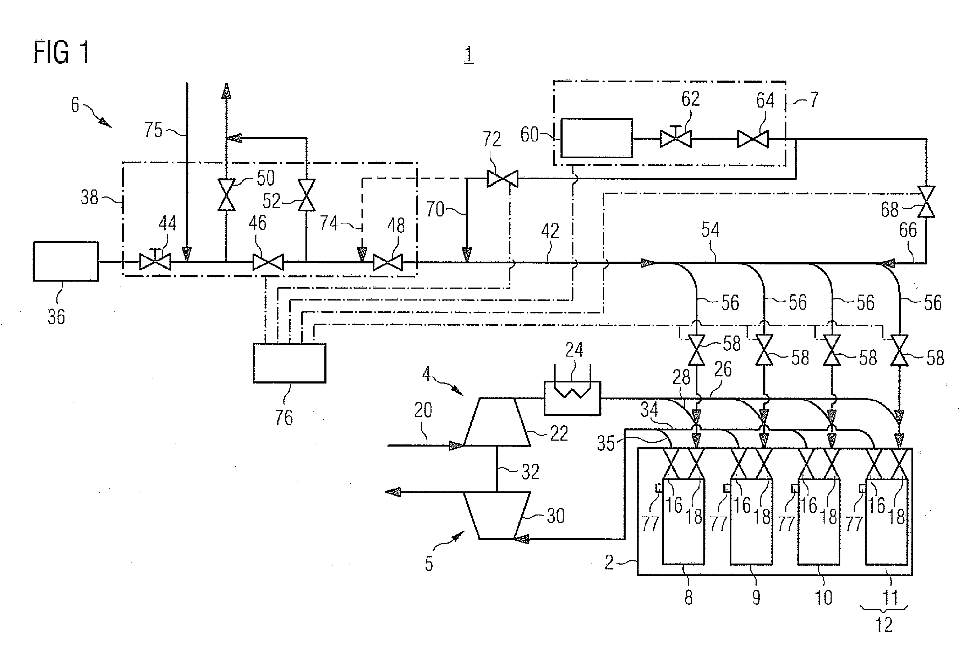

Referring to Fig. 1, a schematic diagram of an exemplary dual fuel internal combustion engine 1 including an engine block 2, a charge air system 4, an exhaust gas system 5, a gaseous fuel system 6, and a purge gas system 7 is shown.

Dual fuel internal combustion engine 1 may include features not shown, such as additional air system components, additional cooling system components, additional exhaust gas components, peripheries, drivetrain components, etc. Dual fuel internal combustion engine 1 may be used to power any machine or other device, including, but not limited to, locomotive applications, on-highway trucks or vehicles, off-highway trucks or machines, earth moving equipment, generators, aerospace applications, marine applications, offshore applications, pumps, stationary equipment, or other engine powered applications. Dual fuel internal combustion engine 1 can be powered with a liquid fuel such as, for example, diesel fuel in a liquid fuel mode (LFM), and with a gaseous fuel such as, for example, methane gas in a gaseous fuel mode (GFM).

Engine block 2 comprises a plurality of cylinders. Exemplarily, four cylinders 8, 9, 10 and 11 are depicted in Fig. 1. Engine block 2 may be of any size, with any number of cylinders, and in any configuration, for example, "V," in-line, radial, etc. As will be described in greater detail later on, cylinder 11 of the four cylinders belongs to a subgroup 12 of cylinders, whereas cylinders 8 - 10 do not belong to subgroup 12.

Each cylinder 8 - 11 is equipped with at least one inlet valve 18 and at least one outlet valve 16. Inlet valves 18 are configured to provide charge air, or a mixture of charge air and gaseous fuel into cylinders 8-11. Analogous, outlet valves 16 are configured to direct exhaust gas out of a respective cylinder 8 - 11.

Charge air is provided by charge air system 4. Charge air system 4 comprises an air intake 20 fluidly connected to a compressor 22 which in turn is fluidly connected to a charge air cooler 24. A charge air manifold 26 is fluidly connected downstream of charge air cooler 24 and guides charge air via cylinder specific inlet channels 28 into respective cylinders 8 - 11.

In the shown configuration, compressor 22 and an exhaust gas turbine 30 are connected via a shaft 32 to form a one stage turbocharger. As an alternative example, a two stage turbocharger with intercooling may be provided.

Charge air manifold 26 is fluidly interconnected between charge air cooler 24 and individual inlet channels 28 to guide charge air into individual cylinders 8 - 11. Depending on the type of engine block 2, more than one charge air manifold may be provided. For example, in case engine block 2 is configured in a V-arrangement, both cylinder banks may comprise an individual charge air manifold, or a common charge air manifold for both cylinder banks may be provided.

As charge air heats up during compression within compressor 22, charge air cooler 24 is provided to cool down the charge air to a desired level prior combustion.

Exhaust gas system 5 with exhaust gas turbine 30 further comprises an exhaust gas manifold 34 guiding exhaust gas from individual exhaust gas channels 35 to exhaust gas turbine 30. Each exhaust gas channel is fluidly connected between one of the plurality of cylinders 8 - 11 and exhaust gas manifold 34. Similarly to charge air manifold 26 and depending on the type of engine block 2, exhaust gas system 5 may comprise more than one exhaust gas manifold. For example, in case engine block 2 is configured in a V-arrangement of the cylinders, both cylinder banks may comprise an individual exhaust gas manifold, or a common exhaust gas manifold for both cylinder banks may be provided. In addition, inlet valves 18 and outlet valves 16 may be installed within inlet channels 28 and outlet channels 35, respectively.

Inlet channels 28 as well as outlet channels 35 may be provided within a common cylinder head or individual cylinder heads covering cylinders 8 - 11.

As noted above, additional components not specifically depicted in Fig. 1 may be part of charge air system 4 and exhaust gas system 5. For example, both charge air system 4 and exhaust gas system 5 may include a silencer to reduce the generation of noise during operation.

Gaseous fuel system 6 comprises a gaseous fuel tank 36, and a gas valve unit 38 (indicated in Fig. 1 by a dashed dotted box). Gaseous fuel tank 36 constitutes a gaseous fuel source for supplying gaseous fuel for combustion in GFM. For example, gaseous fuel tank 36 contains methane gas in a pressurised state.

Gas valve unit 38 is configured to allow, to block and to control flow from gaseous fuel tank 36 into gaseous fuel piping 42. In the shown configuration, gas valve unit 38 may comprise a gaseous fuel control valve 44, and two gaseous fuel shut-off valves 46 and 48 connected in series. Gaseous fuel control valve 44 is configured to adjust a flow of gaseous fuel from gaseous fuel tank 36 through gas valve unit 38. First and second gaseous fuel shut-off valves 46 and 48 are configured to instantaneously allow or block flow of gaseous fuel from gaseous fuel tank 36. Gas valve unit 38 further comprises a first and second venting valve 50 and 52 configured to release gaseous fuel and/or purge gas to the environment in an opened state.

Gas piping 42 is fluidly connected to a gaseous fuel manifold 54 which splits into a plurality of gaseous fuel channels 56. Each gaseous fuel channel 56 is fluidly connected to one of the plurality of inlet channels 28. To dose gaseous fuel into individual inlet channels 28, in each gaseous fuel channel 56, a gaseous fuel admission valve 58 is installed. In some embodiments, dual fuel internal combustion engine 1 may comprise more than one gaseous fuel manifold 54.

Each gaseous fuel admission valve 58 is configured to allow or to block flow of gaseous fuel into an individual inlet channel 28 to mix with compressed charge air from charge air system 4 in GFM if gaseous fuel is supplied from gaseous fuel tank 36 and gas valve unit 38 allows flow of gaseous fuel. Thus, cylinder specific mixing zones downstream of each gaseous fuel admission valve 58 are generated. For example, gaseous fuel admission valves 58 8 may be solenoid actuated plate valves in which springs hold a lower surface of a movable disk against an upper surface of a stationary disk or plate, the two surfaces being configured to provide a sealed relationship in a closed state of gaseous fuel admission valve 58. Each gaseous fuel admission valve 58 may be mounted to a cylinder head covering at least one cylinder 8 - 11.

Purge gas system 7 (indicated in Fig. 1 by a dashed dotted box) comprises a purge gas tank 60, a purge gas control valve 62, and a first purge gas shut-off valve 64 connected in series. Purge gas tank 60 constitutes a purge gas source to flush gaseousfuel piping 42, gaseous fuel manifold 54, etc. with a purge gas. For example, purge gas tank 60 may contain an inert gas such as nitrogen in a pressurised state. Purge gas control valve 62 is configured to adjust a flow of purge gas from purge gas tank 60, and first purge gas shut-off valve 64 is configured to instantaneously allow or block flow of purge gas from purge gas tank 60.

Purge gas system 7 is fluidly connected to gaseous fuel system 6 at various locations. A first connection 66 is disposed proximal to the gaseous fuel manifold 54. A purge gas flow through said first connection 66 can be blocked or allowed by a second purge gas shut-off valve 68. A second connection 70 is disposed proximal to and downstream of gas valve unit 38. Alternatively or additionally to second connection 70, a third connection 74 (indicated in Fig. 1 by a dashed line) may be integrated in gas valve unit 38. Specifically, second connection 70 may be disposed directly downstream of second gaseous fuel shut-off valve 48, whereas third connection 74 may be disposed at a fluid connection of first gaseous fuel shut-off valve 46 and second gaseous fuel shut-of valve 48 within gas valve unit 38. Flow of purge gas through second connection 70, and/or third connection 74 can be blocked or allowed by a third purge gas shut-off valve 72 disposed outside of gas valve unit 38. Alternatively, third purge gas shut-off valve 72 may be integrated in gas valve unit 38, particularly, if third connection 74 exists. A fourth connection 75 is schematically indicated in Fig. 1 and is fluidly interconnected between purge gas system 7 and a fluid connection between gaseous fuel control valve 44 and first gaseous fuel shut-off valve 46.

To control operation of dual fuel internal combustion engine 1, a control unit 76 is provided. Control unit 76 forms part of a control system and is configured to control various components of dual fuel internal combustion engine 1 such as valves of gas valve unit 38, valves of purge gas system 7, gaseous fuel admission valves 58, and purge gas valves 68 and 72 via control connection lines (indicated in Fig. 1 by dashed dotted lines). For the sake of simplicity, further control connection lines between control unit 76 and other components are not depicted.

Engine 1 may further comprise a plurality of combustion pressure sensors 77 mounted at each cylinder 8-11 and configured to generate a signal indicative of a combustion pressure for each cylinder, and/or a plurality of combustion temperature sensors 77 mounted at each cylinder 8-11 configured to generate a signal indicative of a combustion temperature for each cylinder. Alternatively or additionally, a plurality of knocking sensors 77 may be mounted at each cylinder 8-11 configured to generate a signal indicative of a knocking parameter for each cylinder. Sensor 77 may be connected to control unit 76.

### Industrial Applicability

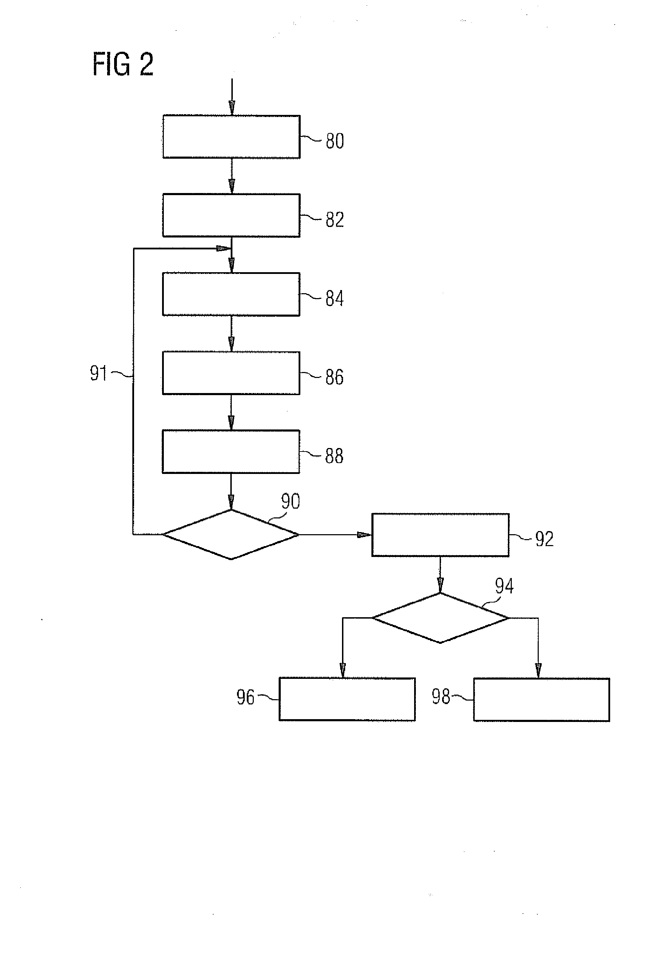

In the following, operation and control of dual fuel internal combustion engine 1 is described with reference to Figs. 1 and 2.

As noted above, dual fuel internal combustion engine 1 can be operated with different kinds of fuels. Specifically, dual fuel internal combustion engine 1 can be operated in either a LFM, for example a diesel fuel mode, or a GFM, for example, a methane gas mode.

For the LFM, charge air system 4 provides charge air which is pressurised by compressor 22 to individual cylinders 8 - 11. Compressed charge air is further compressed by a piston moving towards a top dead center (TDC) of a respective cylinder. A liquid fuel injection system (not shown) provides liquid fuel to compressed charge air such that the charge air/liquid fuel mixture is ignited due to self ignition of the liquid fuel caused by a high pressure and a high temperature within each cylinder 8 - 11.

For the GFM, a gaseous fuel such as methane gas is supplied from gaseous fuel tank 36 of gaseous fuel system 6. Gas valve unit 38 allows flow of gaseous fuel into gaseous fuel piping 42. Gaseous fuel admission valves 58 dose gaseous fuel into compressed charge air supplied by charge air system 4 and passing inlet channels 28, thereby, producing a charge air / gaseous fuel mixture. Said mixture enters each cylinder 8 - 11 through opened inlet valves 18, is compressed by a piston moving towards TDC, and is ignited by injection of a small amount of ignition fuel, for example, diesel fuel. Due to the high pressure and temperature, the ignition fuel instantaneously ignites, and, thereby, also ignites the compressed charge air gaseous fuel mixture. The amount of ignition fuel may be, for example, within the range of 0.5 % to 5 % of the fuel amount injected during LFM.

For both LFM and GFM, after combustion of the air fuel mixture, exhaust gas leaves the cylinders 8 - 11 through opened outlet valves 16 via outlet channels 35 to exhaust gas system 5.

Turning to Fig. 2, a method for ending GFM is depicted. An ending process of GFM may be required either if a transition from GFM to LFM is performed, or if operation of GFM and dual fuel internal combustion engine 1 is stopped.

At step 80, an engine load of dual fuel internal combustion engine 1 is reduced prior initiating the ending process to increase the reaction time and time frame for the ending process. A reduced load on dual fuel internal combustion engine 1 directly implies a reduced fuel consumption. By reducing the engine load, the reaction time to control and switch various components associated with the ending process can be enhanced. Alternatively, step 80 may not be required if the timing at the present load is sufficient. Then, the engine load may be maintained unchanged when initiating the ending process.

At step 82, the ending process of GFM is initiated by stopping supply of gaseous fuel from gaseous fuel tank 36 by closing valves 44, 46, and/or 48.

Control unit 76 is configured such that the remaining gaseous fuel within gaseous fuel piping 42 and gaseous fuel manifold 54 is combusted only in a subgroup 12 of cylinders at step 84. In some embodiments, that combustion is also based on a liquid fuel amount provided to subgroup 12 of cylinders. The other cylinders 8, 9, 10, which are not in subgroup 12, are supplied with liquid fuel only similar to a pure LFM. Supply with gaseous fuel to subgroup 12 can be achieved by opening of respective gaseous fuel admission valve 58, whereas the other gaseous fuel admission valves 58 of cylinders 8 - 11 not in subgroup 12 are maintained in a closed state.

As an example and as noted above, subgroup 12 contains cylinder 11, and the remaining cylinders 8 to 10 are not in subgroup 12. However, in other embodiments, subgroup 12 may be formed by other, and/or additional cylinders. In each configuration, at least one cylinder is not in subgroup 12.

In some embodiments, all cylinders 8 - 11 may be supplied with the same amount of liquid fuel during the ending process. This can be the case if a liquid fuel injection system is only capable to adjust a liquid fuel injection amount for each cylinder 8 - 11 according to a common setting. For example, the liquid fuel injection system may comprise a flexible cam technology which may be only capable to commonly adjust a liquid fuel injection amount for each cylinder 8 - 11.

In other embodiments, for example in a common-rail liquid fuel injection system which may comprise piezo-actuated liquid fuel injectors for each cylinder, the liquid fuel injection amount for each cylinder may be set individually. In that case, the individual setting will be considered when assessing the combustion parameters, which will be described later on.

To cause remaining gaseous fuel to flow into cylinder 11, a purge gas may be provided by purge gas system 7 into gaseous fuel piping 42, for example, via second connection 70, and/or third connection 74. In case the purge gas is supplied via third connection 74, second gaseous fuel shut-off valve 48 has to be opened. The supplied purge gas "pushes" the remaining gaseous fuel in direction of subgroup 12.

Supply of purge gas may also help to maintain a certain pressure level within gaseous fuel piping 42, gaseous fuel manifold 54, and gaseous fuel channels 56, which may be required to maintain a pressure difference between gaseous fuel channels 56 and inlet channels 28, which may be required for operation of gaseous fuel admission valves 58.

To effectively "push" as much as possible of the remaining gaseous fuel into subgroup 12, the purge gas may enter gaseous fuel system 6 at a position far from cylinders 8 - 11, for example, through connection 70 via opened purge gas valve 72. Additionally, subgroup 12 may only include cylinders fluidly located farthest away from gaseous fuel tank 36, and/or may only include cylinders fluidly located farthest away from purge gas tank 60 such that as much as possible can be flushed for combustion.

In some embodiments, subgroup 12 includes in total exactly one cylinder, for example cylinder 11, for each cylinder bank. For example, in case dual fuel internal combustion engine 1 has two cylinder banks, one cylinder of each cylinder bank may be in subgroup 12.

Combusting remaining gaseous fuel together with liquid fuel in fourth cylinder 11 results in a combustion process which differs from the combustion process within the other cylinders 8 - 10 as those cylinders 8 - 10 only combust liquid fuel. In other words, cylinders of subgroup 12 combust liquid fuel and a surplus of remaining gaseous fuel and, thus, receive a larger energy amount, whereas cylinders not in subgroup 12 combust liquid fuel only.

Referring again to Fig. 2, a combustion process parameter is measured in at least one cylinder of subgroup 12 and at least one cylinder not in subgroup 12, for example, cylinder 8, at step 86. The combustion process parameter may be, for example, a combustion pressure, a combustion temperature, or a combustion sound/knocking parameter.

A difference of the measured combustion process parameters of cylinder 11 of subgroup 12 and a cylinder not in subgroup 12 is determined at step 88.

In some embodiments, only the cylinders for which the combustion parameters are measured are supplied with the same liquid fuel injection amount such as, for example, cylinder 11 of subgroup 12 and cylinder 8, which is not in subgroup 12. In those configurations, the liquid fuel injection system is capable to individually adjust the liquid fuel injection amount for each cylinder 8 to 11.

At decision 90, control unit 76 checks if the determined difference in the combustion process is within a preset acceptable range. As long as the difference is not (yet) within a preset acceptable range, remaining gaseous fuel is still present in a substantial amount and can be combusted during the ending process (indicated by loop 91 in Fig. 2). As soon as the remaining gaseous fuel is completely combusted, the combustion process in cylinders of subgroup 12 and cylinders not in subgroup 12 will become similar. As soon as the difference in the combustion process parameter moves into the preset acceptable range, a signal is generated at step 92. The signal indicates that the remaining gaseous fuel was combusted and gas piping 42 and gaseous fuel manifold 54 are substantially free of gaseous fuel.

For example, the preset acceptable range may reach until 105 %, 110 %, 115%, or 120 % of a maximum load parameter with respect to a pressure value, a temperature value, or a knocking parameter value.

At decision 94, it is determined if dual fuel internal combustion engine 1 should be either stopped or operated in LFM. Stopping of dual fuel internal combustion engine 1 is performed at step 96.

Continuing operation of dual fuel internal combustion engine 1 in LFM is performed at step 98. If engine 1 is further operated in LFM, the engine load may be increased if the engine load was decreased prior the ending process. Additionally, a purge gas supply from purge gas system 7 can be stopped based on the signal.

Control unit 76 is configured to perform the above described method steps, and may be a single microprocessor or plural microprocessors that may include means for controlling, among others, an operation of the various components of dual fuel internal combustion engine 1, for example, inlet valves 18, outlet valves 16, gas valve unit 38, gaseous fuel admission valves 58, and purge gas system 7. Control unit 76 may be a general engine control unit (ECU) capable of controlling numeral functions associated with dual fuel internal combustion engine 1 and/or its associated components. Control unit 76 may include all the components required to run an application such as, for example, a memory, a secondary storage device, and a processor such as a central processing unit or any other means known in the art for controlling dual fuel internal combustion engine 1 and its various components.

Various other known circuits may be associated with control unit 76, including power supply circuitry, signal-conditioning circuitry, communication circuitry, and other appropriate circuitry. Control unit 76 may analyze and compare received and stored data, and, based on instructions and data stored in memory or input by a user, determine whether action is required. For example, control unit 76 may compare received values with target values stored in memory, and based on the results of the comparison, control unit 76 may transmit signals to one or more components to alter the operation status thereof.

Control unit 76 may include any memory device known in the art for storing data relating to operation of dual fuel internal combustion engine 1 and its components. The data may be stored in the form of one or more maps that describe and/or relate, for example, valve opening timing. Each of the maps may be in the form of tables, graphs, and/or equations, and include a compilation of data collected from lab and/or field operation of the dual fuel internal combustion engine 1. The maps may be generated by performing instrumented tests on the operation of the dual fuel internal combustion engine 1 under various operating conditions while varying parameters associated therewith. Control unit 76 may reference these maps and control operation of one component in response to the desired operation of another component.

In another aspect of the present disclosure, a method for determining a change in the filling state of a gaseous fuel supply line of a dual fuel internal combustion engine 1 is disclosed. For example, the method maybe need to indentify the change between a filling state of, for example, air, nitrogen, natural or methane gas to another one of those gaseous mediums. The method may comprise combusting a gaseous medium from the gaseous fuel piping together with liquid fuel in a subgroup 12 of cylinders. The method may further comprise determining that the difference of a combustion process parameter in at least one cylinder 11 of the subgroup 12 and at least one cylinder 8, 9, 10 not in the subgroup 12, which combusts liquid fuel only, is within a preset range. The method may further comprise indicating a filling state of the gaseous fuel supply line, for example, a gaseous fuel filling state.

For example, the preset range may be set to determine that substantially no gaseous fuel is present in the gaseous fuel piping if the difference becomes smaller than a preset threshold. As an alternative example, the preset range may be set to determine that the gaseous fuel piping is completely filled if the difference becomes greater than a preset threshold.

The specific embodiments described herein in connection with the ending process of the dual fuel mode may be also applied to the above mentioned method for determining a gaseous fuel filling state, where applicable.

In another aspect of the present disclosure, a method for starting a gaseous fuel mode of a dual fuel internal combustion engine 1 is disclosed. The method may comprise initiating the starting process by starting supply of a gaseous fuel to a gaseous medium filled gaseous fuel supply line. The method may further comprise, during the starting process, combusting the gaseous medium with an increasing content of supplied gaseous fuel together with liquid fuel in a subgroup 12 of cylinders. The method may further comprise determining that the difference of a combustion process parameter in at least one cylinder 11 of the subgroup 12 and at least one cylinder 8, 9, 10 not in the subgroup 12, which combusts liquid fuel only, is within a preset acceptable range. The method may further comprise indicating that the starting process is completed.

Again, the specific embodiments described herein in connection with the ending process of the dual fuel mode may be also applied to the above mentioned starting process for the dual fuel mode, where applicable.

In the herein disclosed aspects, use may be made of different combustion properties such as energy content of a gaseous medium being at least temporally provided in the gaseous fuel line. As those different combustion properties affect the combustion only in selected ones of the cylinder units, monitoring respective combustion parameters allows conclusions with respect to the filling state and, thus, the stage of an ending / starting / switching process.

Although the preferred embodiments of this invention have been described herein, improvements and modifications may be incorporated without departing from the scope of the following claims.

## Claims

1. A method for ending a gaseous fuel mode of a dual fuel internal combustion engine (1), the method comprising:
initiating the ending process by stopping supply of gaseous fuel;
during the ending process, combusting remaining gaseous fuel together with liquid fuel in a subgroup (12) of cylinders (8, 9, 10, 11);
determining that the difference of a combustion process parameter in at least one cylinder (11) of the subgroup (12) and at least one cylinder (8, 9, 10) not in the subgroup (12), which combusts liquid fuel only, is within a preset acceptable range; and
indicating that the ending process is completed.

2. The method of claim 1, further comprising:
supplying a purge gas to cause remaining gaseous fuel to flow towards the subgroup (12) during at least some time period within the ending process.

3. The method of claim 1 or 2, further comprising:
stopping operation of the dual fuel internal combustion engine (1) once the ending process is completed; or
continuing operation of the dual fuel internal combustion engine (1) in a liquid fuel mode once the ending process is completed.

4. The method of any one of the preceding claims, further comprising reducing an engine load of the dual fuel internal combustion engine (1) prior initiating the ending process.

5. The method of any one of the preceding claims, further comprising increasing the engine load once the ending process is completed.

6. The method of any one of the preceding claims, further comprising supplying the same amount of liquid fuel to each cylinder (8, 9, 10, 11) during the ending process.

7. The method of any one of the preceding claims, further comprising adjusting the engine load based on a detected value of the combustion process parameter in the subgroup (12).

8. The method of any one of the preceding claims, wherein the combustion process parameter is at least one of a combustion temperature, a combustion pressure, a combustion sound, or a knocking parameter.

9. The method of any one of the preceding claims, wherein the preset acceptable range reaches until 110 % of a maximum load parameter.

10. The method of any one of the preceding claims, wherein, for each cylinder bank, the subgroup (12) of cylinders (8, 9, 10, 11) includes in total exactly one cylinder (11).

11. The method of any one of the preceding claims, wherein the subgroup (12) is chosen to be fluidly located farthest away from a gaseous fuel source (36).

12. The method of any one of the preceding claims, wherein the subgroup (12) is chosen to be fluidly located farthest away from a purge gas source (60).

13. The method of any one of the preceding claims, wherein supplying a purge gas comprises providing an inert gas.

14. A control system for controlling operation of a dual fuel internal combustion engine (1) configured to operate in a liquid fuel mode and in a gaseous fuel mode, the control system comprising a control unit (76) configured to control the dual fuel internal combustion engine (1) according to a method of any one of claims 1 to 13.

15. The control system of claim 14, further comprising at least one of:
a plurality of combustion pressure sensors (77) configured to generate a signal indicative of a combustion pressure for each cylinder;
a plurality of combustion temperature sensors (77) configured to generate a signal indicative of a combustion temperature for each cylinder; and/or
a plurality of knocking sensors (77) configured to generate a signal indicative of a knocking parameter for each cylinder.
